# EUROPÄISCHE PATENTSCHRIFT

(11) **EP 1 540 811 B1**
(45) Veröffentlichungstag und Bekanntmachung des Hinweises auf die Patenterteilung: **01.12.2010**
(21) Anmeldenummer: 02777050.2
(22) Anmeldetag: 10.09.2002
(51) Int. Cl.: H02P 9/00

(54) **BETRIEBSVERFAHREN FÜR WINDENERGIEANLAGE MIT ÜBERSYNCHRONER KASKADE**
OPERATING METHOD FOR A WIND TURBINE WITH A SUPERSYNCHRONOUS CASCADE
PROCEDE D'UTILISATION D'UNE INSTALLATION EOLIENNE COMPORTANT UNE CASCADE HYPERSYNCHRONE

(43) Veröffentlichungstag der Anmeldung: 15.06.2005
(73) Patentinhaber: DeWind Co., Irvine, CA 92614 (US)
(72) Erfinder: WILLISCH, Wolf, 22147 Hamburg (DE); MÜLLER, Robert, 23564 Lübeck (DE)
(74) Vertreter: Kloiber, Thomas
(86) Internationale Anmeldenummer: PCT/EP2002/010116
(87) Internationale Veröffentlichungsnummer: WO 2004/025823

(56) Entgegenhaltungen:
- WO-A-03/026121
- DE-A- 10 117 212
- DE-A- 19 735 742
- DE-A- 19 845 569

## Beschreibung

Die Erfindung betrifft eine Windenergieanlage mit einem vom Wind antreibbaren Rotor, vorzugsweise mit einem oder mehreren Winkel verstellbaren Rotorblättern, einem mit dem Rotor direkt oder indirekt verbundenem Generator zur Erzeugung elektrischer Energie, der als Asynchrongenerator mit übersynchroner Stromrichterkaskade im Rotorkreis für einen schlupfvariablen Generatorbetrieb ausgebildet ist, so daß die Leistungsabgabe des Generators bei variabler Rotorendrehzahl möglich ist, und einem Betriebsführungssystem, das innerhalb eines vorgegebenen Windgeschwindigkeitsbereichs die Rotorendrehzahl, vorzugsweise unter Verstellen der Rotorblattwinkel, regelnd ausgebildet ist.

Außerdem betrifft die Erfindung ein Verfahren zur Regelung der Leistungsabgabe einer Windenergieanlage indem der Schlupf geregelt wird.

Eine gattungsgemäße Anlage ist aus der älteren Anmeldung der Anmelderin DE 10117212.5 bekannt.

Solche Windenergieanlagen, die mit variabler Rotordrehzahl und variablen Rotorblattwinkeln arbeiten, erwirtschaften mehr elektrische Energie als Anlagen, die mit einer einzigen festen Rotordrehzahl und fest vorgegebenen Rotorblattwinkeln arbeiten. Üblicherweise arbeitet man mit variabler Drehzahl im Bereich sehr geringer Windgeschwindigkeiten, wobei die Rotorblätter einen großen Winkel gegenüber dem einfallenden Wind einnehmen, der nur wenig kleiner ist als 90 Grad. Dieser Rotorblattwinkel wird bei zunehmenden Windgeschwindigkeiten zunächst nicht verändert, bis die Windgeschwindigkeit ausreicht, um den Rotor mit Nenndrehzahl zu drehen, wobei die Windenergieanlage ihre Nennleistung abgibt. Die Leistungsabgabe nimmt also ausgehend von einer sehr kleinen Leistung bei einer Mindestwindgeschwindigkeit zusammen mit der Rotordrehzahl zu, bis die Nennleistung erreicht ist. Bei weiter zunehmender Windgeschwindigkeit wird nunmehr die Nennleistung und die Nenndrehzahl möglichst konstant gehalten, indem die Rotorblätter immer weiter in Windrichtung verstellt werden, bis die Windgeschwindigkeit über eine Abschaltgeschwindigkeit ansteigt. Hier wird die Windenergieanlage abgeschaltet, indem die Rotorblätter vollkommen in Windrichtung gedreht werden, so daß die Rotorblattwinkel gegenüber der Windrichtung etwa null Grad betragen. Dadurch wird der Rotor abgebremst. Die Abschaltung bei sehr hohen Windgeschwindigkeiten ist notwendig, weil die Belastung der Windenergieanlage im Betrieb bei Starkwind, insbesondere bei Böen, so groß werden kann, daß Beschädigungen auftreten.

Mit zunehmender Leistung und Anzahl solcher Windenergieanlagen bereitet der Ausgleich kurzzeitiger Leistungsschwankungen in den EVU immer größere Schwierigkeiten. Deshalb werden die Anforderungen nach der Qualität des eingespeisten Stromes immer höher.

Zu diesem Zweck sind geeignete Steuerungen für asynchrone Generatoren entwickelt werden. Solch ein asynchroner Generator erreicht durch entsprechende Computersteuerung einen variablen Schlupf von bis zu 10 %, das bedeutet, daß der Rotor und Generator eine Schwankung von 10 % in der Drehzahl bei Windböen zulassen. Bei starken Winden hält der Generator die Stromerzeugung konstant auf Nennleistung. Die Elastizität im System minimiert die Beanspruchung der vitalen Komponenten der Windenergieanlage und verbessert die Qualität des Stroms, der in das Stromnetz eingespeist wird.

Bei dieser bekannten Betriebsweise der Windkraftanlage mit einem Drehstromgenerator ist die Drehzahlanpassung für eine gleichförmige Netzeinspeisung bei böigen Wind durch einen veränderlichen Schlupf mit einem pulsgesteuerten Widerstand im Rotorkreis verwirklicht. Die Rotorschlupfleistung bleibt ungenutzt und wird in Wärme umgesetzt.

Ein weiteres bekanntes Konzept ist die übersynchrone Kaskade für einen asynchronen Generator mit Schleifringen. Die gleichgerichtete Schlupfleistung wird dabei über einen netzgeführten Wechselrichter in das Netz gespeist. Nachteilig bei dieser Anwendung sind starke Pendelmomente der erzeugten Stromschwingungen im Generator, ein hoher Blindleistungsbedarf und ein mögliches Wechselrichterkippen bei Netzausfall.

Ein anderes, aus US-A-6,137,187 bekanntes Verfahren einer Kaskade, ist die Regelung der Rotorströme mit einem Spannungszwischenkreis-Umrichter nach einem feldorientierten Verfahren für einen doppelt gespeisten Drehstromgenerator zur Nutzung eines unter- und übersynchronen Drehzahlbereiches. Die feldorientierten Regelungsverfahren des doppelt gespeisten Asynchrongenerators sind problematisch bei kurzen Spannungseinbrüchen im Netz und bei Netzkurzschluß.

Aufgabe der Erfindung ist es, eine Windenergieanlage vorzuschlagen, die eine höhere Qualität des eingespeisten Stromes bereitstellt, sowie ein Verfahren zum Betrieb einer solchen Anlage. Das Verfahren zum Betrieb der Windkraftanlage soll robust und kostengünstig arbeiten und besonders in störanfälligen Netzen eingesetzt werden können. Insbesondere ist es eine weitere Aufgabe der Erfindung ein Verfahren anzugeben, das die wirtschaftliche Erzeugung elektrischer Energie auch bei schwachen Wind ermöglicht.

Die Verrichtungsaufgabe wird bei einer gattungsgemäßen Anlage dadurch gelöst, daß die übersynchrone Stromrichterkaskade im Rotorkreis zur Einspeisung der Schlupfleistung in das Netz ausgebildet ist. Die Schlupfleistung wird also erfindungsgemäß in das Netz eingespeist. Der Betrieb der Windkraftanlage wird dadurch wirtschaftlicher.

Dies wird vorteilhafterweise dadurch erreicht, daß die übersynchrone Stromrichterkaskade einen Gleichspannungszwischenkreis aufweist, der als Hochsetzsteller ausgebildet ist.

Dabei ist mit Vorteil vorgesehen, daß der Hochsetzsteller mit einer Frequenz schaltend ausgebildet ist, die ein Vielfaches, vorzugsweise im Bereich zwischen dem 10 bis100 fachen, der Netzfrequenz beträgt.

Der Hochsetzsteller kann eine Pulsweitenmodulation aufweisen oder aus IGBT-Schaltern mit variabler Frequenz schaltbar ausgebildet sein. Eine in Abhängigkeit der Rotorströme, -frequenz und -spannungen gesteuerte Pulsweitenmodulation der IGBT-Schalter steuert eine der Netzspannung angepaßte Zwischenkreisspannung für den netzseitigen Pulsumrichter.

Zur Vermeidung von Stromoberschwingungen der Rotorströme werden die IGBT-Schalter vorteilhaft mit variabler hoher Schaltfrequenz und 180 Grad phasenverschoben getaktet, um die schlupfabhängige Welligkeit der gleichgerichteten Rotorspannung nachzufahren.

Mit Vorteil ist vorgesehen, daß der Stator bei einer niedrigen Windgrenzgeschwindigkeit sich kurzschließend, vorzugsweise über einen dreiphasigen Schlupfwiderstand, und sich vom Netz trennend ausgebildet ist. Der Generator kann dann auch noch bei geringen Windgeschwindigkeiten als einfacher Asynchrongenerator Leistung ins Netz liefern.

Bei einem gattungsgemäßen Verfahren wird die Aufgabe dadurch gelöst, daß die Schlupfleistung in das Netz eingespeist wird.

Dabei wird vorteilhafter Weise die drehzahlabhängige, gleichgerichtete Rotorspannung des Generators mit den Hochsetzstellern auf das Niveau der Netzspannung angehoben.

Eine vorteilhafte Ausgestaltung des Verfahrens ist, wenn die Leistungsabgabe der Stromrichterkaskade ins Netz durch eine Pulsweitenmodulation gesteuert wird.

Zur Qualität des Netzes kann vorteilhaft beigetragen werden, wenn die Einspeisung der Zwischenkreisleistung ins Netz an den Blindenleistungsbedarf des Netzes angespaßt erfolgt.

Mit Vorteil ist vorgesehen, die Schaltung des Zwischenkreisstromes durch die beiden Hochsetzsteller 180 Grad phasenversetzt zueinander, vorzugsweise pulsweitenmoduliert und/oder frequenzvariabel, erfolgt, um Rückwirkungen von Stromoberschwingungen auf den Generator, resultierend aus der Welligkeit der gleichgerichteten, schlupfabhängigen Rotorspannung U_{ZS}, zu minimieren.

Die Energieausbeute kann vorteilhaft dadurch gesteigert werden, daß der Drehstromgenerator bei normalen Windverhältnissen im Normalbetrieb mit der übersynchronen Kaskade mit dem Hochsetzsteller betrieben wird und bei geringem Wind durch Trennen seines Stators vom Stromnetz und Kurzschließen desselben über einen dreiphasigen Schlupfwiderstand zu einer einfachen Asynchronmaschine umgeschaltet und als solche betrieben wird.

Dies gilt insbesondere, wenn der Asynchrongenerator mit den Kondensatoren selbsterregend gefahren wird und frequenzvariable in Abhängigkeit der Rotorumdrehungen seine elektrische Energie über den Gleichrichter und den Hochsetzsteller in die Zwischenkreiskondensatoren speist, und der Pulsumrichter die erzeugte Energie in das Stromnetz einspeist.

Insbesondere ist es vorteilhaft, wenn, sobald die mechanische Leistung die elektrische Leistung des Pulsumrichters übersteigt, der Generator mit dem Stator synchronisiert und mit dem Stromnetz verbunden wird, und die übersynchrone Schlupfleistung mit der Kaskadenanordnung in das Netz gespeist wird.

Schließlich kann auf besondere Widerstände dadurch verzichtet werden, daß mindestens ein Kabel von dem vorzugsweise in einer Gondel angeordneten Generator zu einem Schaltschrank in einem Turmfuß geführt ist und als Schlupfwiderstand wirken.

Weitere Vorteile und Einzelheiten der Erfindung ergeben sich aus der nachfolgenden Beschreibung eines Ausführungsbeispiels anhand der Zeichnungen. Darin zeigen:
- Figur 1:: eine schematische Darstellung einer für die Durchführung des erfindungsgemäßen Verfahrens geeignete erfindungsgemäße Windenergieanlage;
- Figur 2:: ein Diagramm mit einer normierten Darstellung der erzeugten Leistung in Abhängigkeit von der Drehzahl und
- Figur 3:: eine schematische Darstellung einer für die Durchführung des erfindungsgemäßen Verfahrens geeignete erfindungsgemäße Variante der Windenergieanlage.

Die dargestellte erfindungsgemäße Windenergieanlage weist einen im Erdboden verankerten Mast 1 und einen an der Oberseite des Mastes 1 montierten Rotor 2 mit drei Rotorblättern auf. Die Rotorblattwinkel sind gegenüber ihrer Längsachse verstellbar ausgebildet. Der Rotor 2 ist über ein Getriebe mit einem elektrischen Asynchrongenerator 3 mechanisch verbunden. Der Ständer 4 des Generators 3 ist elektrisch mit dem Netz 8 verbunden. Dabei sind Netzfrequenz und im Ständer erzeugte Frequenz miteinander synchronisiert. Der Läufer 5 des Generators 3 wird über die Leitungen mit der Umrichteranordnung 6 verbunden, welche ihrerseits mit den Leitungen zwischen Ständer 4 und Netz 8 in Verbindung steht. Die vom Generator erzeugte Schlupfleistung wird mit der Umrichteranordnung 6 in das Netz eingespeist. Die Schlupfleistung des Rotors und damit die Drehzahl wird variabel gesteuert. Die vom Generator 3 in das Netz 8 mit geringen Schwankungen einzuspeisende Leistung wird von einem nicht gezeigten aber dem Fachmann bekannten Betriebsführungssystem erreicht, welches die Rotordrehzahl und den Rotorblattwinkel regelt. Der Stator 4 des Drehstromgenerators 3 kann entweder über einen ersten Schalter 13 mit dem Stromnetz 8 oder alternativ über einen dreiphasigen Schlupfwiderstand 14 und einen zweiten Schalter 15 zu einer kurzgeschlossenen Wicklung elektrisch verbunden werden. Im vorliegenden Schaltbild ist dieser Ständerkurzschluss mit dem Bezugszeichen 16 versehen.

Der Rotor 5 ist elektrisch mit einem Umrichter 6 verbunden, der seinerseits über einen dritten Schalter 7 mit dem Stromnetz 8 verbunden oder von diesem getrennt werden kann.

Der Umrichter 6 besteht aus einem Gleichrichter 9, dem Pulswechselrichter 10 sowie dem Hochsetzsteller 11, die über einen Gleichspannungszwischenkreis 11' elektrisch miteinander verbunden sind. Verschiedene Betriebszustände des Umrichters 6 werden mittels zweier Steuervorrichtungen 12 und 12' für die Frequenz- und Spannungssteuerung des beiden Pulswechselrichters 10 und Hochsetzstellers 11 hergestellt.

Erfindungsgemäß wird der Einsatz der übersynchronen Kaskade für den Drehstromgenerator 3 der Windkraftanlage mit zwei Hochsetzstellern 11 a und 11 b (Boost-Wandler) im Spannungszwischenkreis 11' ausgeführt. Die Spannungen des Rotors 5 werden über einen dreiphasigen ungesteuerten Gleichrichter 9 in eine schlupfabhängige Gleichspannung umgewandelt. Die geglättete Gleichspannung U_{ZS} wird über zwei Induktivitäten und zwei IGBT- Schalter hochgesetzt auf eine Spannung U_{Z}. Die IGBT-Schalter 11a und 11 b laden die Induktivitäten L auf eine Spannung UL, die Dioden D sperren jeweils. Nach Erreichen eines vorgebbaren Stromes werden die IGBT-Schalter 11 a und 11 b geöffnet und an der Induktivität L eine Spannung UZ erzwungen mit der die Zwischenkreiskondensatoren K aufgeladen werden. Ein 6-pulsiger Umrichter 10 taktet die Zwischenkreisenergie oberschwingungsarm über ein Netzfilter F in das Stromnetz.

Zur Vermeidung von Stromoberschwingungen der Rotorströme werden IGBT-Schalter 11 a und 11 b mit variabler hoher Schaltfrequenz und 180 Grad phasenverschoben getaktet, um die schlupfabhängige Welligkeit der gleichgerichteten Rotorspannung U_{ZS} nachzufahren. Eine in Abhängigkeit der Rotor-Ströme, -Frequenz und -Spannungen durch Steuervorrichtung 12' gesteuerte Pulsweitenmodulation der IGBT-Schalter steuert eine der Netzspannung angepaßte Zwischenkreisspannung U_{z} für den netzseitigen Pulsumrichter 10.

Die übersynchrone Kaskade ist also mit zwei 180 Grad phasenverschobenen Hochsetzstellern 11a und 11 b im Spannungszwischenkreis 11' ausgeführt, die die gleichgerichtete Rotorspannung auf eine höhere Zwischenkreisspannung U_{Z} hochsetzen, die über einen Pulsumrichter 10 und über ein Netzfilter F in das Stromnetz 8 eingespeist wird.

Bei normalen Windverhältnissen wird der Drehstromgenerator 3 im Normalbetrieb mit der übersynchronen Kaskade mit dem Hochsetzsteller 11 betrieben und bei geringem Wind durch Trennen seines Stators 4 vom Stromnetz 8 und Kurzschließen desselben über einen dreiphasigen Schlupfwiderstand 14 zu einer einfachen Asynchronmaschine umgestaltet und als solche betrieben.

Dieser asynchrone Generator wird mit den Kondensatoren K' selbsterregt gefahren und speist frequenzvariabel seine elektrische Energie über den sechspulsigen ungesteuerten Gleichrichter 9 und dem nachgeschalteten Hochsetzsteller 11 in die zwischen Kreiskondensatoren K, der Pulsumrichter 10 speist die erzeugte Energie in das Stromnetz 8 ein. Die Steuervorrichtung 12 steuert den Hochsetzsteller 11 pulsweitengesteuert und frequenzvariabel in einer Weise an, daß drehzahlabhängige Welligkeit der Generatorspannung auf eine dem Netz angepaßte Zwischenkreisspannung U_{Z} anhebt. Die Zwischenkreisenergie wird über den Pulsumrichter 10 mit dem Steuergerät 12 sinusförmig in das Netz eingespeist.

Der Asynchrongenerator wird dabei vorteilhaft mit geringem Eisenverlusten gefahren. Elektrische Energiegewinnung wird mit diesem Verfahren mit einem besseren Wirkungsgrad bei niedrigeren Windgeschwindigkeiten gefahren, als mit dem Drehstromgenerator, dessen Stator 4 mit dem Netz 8 verbunden ist. Übersteigt die mechanische Leistung die elektrische Leistung des Pulsumrichters 10, wird der Generator mit dem Stator 4 synchronisiert mit dem Stromnetz 8 verbunden und die übersynchrone Schlupfleistung mit der Kaskadenanordnung in das Netz gespeist.

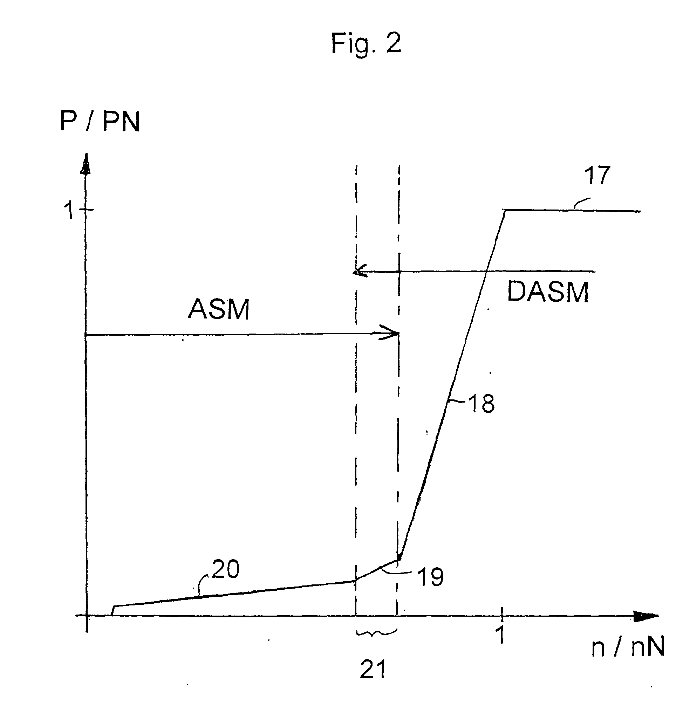

Im Diagramm der Figur 2 ist auf der Abszisse eine Drehzahl n aufgetragen, die auf eine Nenndrehzahl nN normiert ist. Es spielt keine Rolle, ob es sich dabei um die Drehzahl des Propellers 2 oder die des Rotors 5 handelt, denn diese beiden Drehzahlen unterscheiden sich höchstens um einen konstanten Faktor, der durch ein ggf. zwischengeschaltetes starres Übersetzungsgetriebe bedingt sein kann. Der konstante Faktor wird aber durch die Normierung des Maßstabs der Abszisse auf die Nenndrehzahl eliminiert.

Auf der Ordinate des Diagramms von Figur 2 ist eine auf eine Nennleistung PN normierte elektrische Leistung P des Drehstromgenerators 3 aufgetragen, die dieser an das Stromnetz 8 abgeben kann. Die Leistungskurve des Diagramms besteht aus vier gut unterscheidbaren Abschnitten 17, 18, 19, 20.

Bei genügend starkem Wind wird die Windenergieanlage im Abschnitt 17 betrieben. Dabei wird die für die Erzeugung der Nennleistung PN erforderliche Drehzahl nN überschritten. Durch Verstellen des Anstellwinkels der Propellerblätter 2 wird die tatsächliche Drehzahl n der Windstärke angepasst und dabei durch entsprechende Steuerung des Umrichters 6 mittels der Steuervorrichtung 12, 12' die an das Stromnetz 8 abgegebene Leistung P konstant auf der Nennleistung PN gehalten. Der Drehstromgenerator 3 wird in diesem Bereich im Normalbetrieb über die Stromrichteranordnung 6 im übersynchronen Kaskadenbetrieb gefahren. Der Normalbetriebszustand ist in der Figur 2 mit DASM bezeichnet.

Bei schwächer werdendem Wind kann die für die Erzeugung der Nennleistung PN erforderliche Drehzahl nN nicht mehr gehalten werden. Im Bereich 18 der Leistungskurve fällt daher die tatsächlich abgegebene Leistung P unter die Nennleistung PN ab und zwar in etwa proportional zur abfallenden Drehzahl n, bis eine minimale Drehzahl erreicht ist, mit der die Windenergieanlage im Normalbetriebszustand DASM noch wirtschaftlich betrieben werden kann. Bei noch schwächeren Windstärken müsste eine Windenergieanlage ohne das erfindungsgemäße Betriebsverfahren stillgesetzt werden.

Die Erfindung ermöglicht aber den Weiterbetrieb der Windenergieanlage bei sehr schwachem Wind, durch Umschalten in einen Betriebszustand ASM, in dem der Drehstromgenerator 3 als Asynchronmaschine und der Umrichter 6 als Vollumrichter betrieben wird. Dabei wird der Stator 4 durch Öffnen des ersten Schalters 13 vom Stromnetz 8 getrennt und über den Schlupfwiderstand 14 durch Schließen des zweiten Schalters 15 kurzgeschlossen. Somit wird verhindert, daß die Eisenverluste des Stators 4 am Stromnetz 8 die gleichzeitig vom Generator erzeugte elektrische Energie überwiegen.

Wie man im Diagramm von Figur 2 erkennen kann, fällt der Abschnitt 20 der Leistungskurve wiederum in etwa proportional mit der Drehzahl ab, allerdings mit einer flacheren Steigung als im Abschnitt 18. Dieser Betriebszustand ASM ermöglicht die wirtschaftliche Energieeinspeisung bei geschlossenem dritten Schalter 7 in das Stromnetz 8 auch noch bei sehr geringen Drehzahlen n, die bei sehr geringen Windstärken erreicht werden. Im Abschnitt 20 der Leistungskurve kann die erfindungsgemäß betriebene Windenergieanlage somit zusätzliche Energie erzeugen, die von einer auf herkömmliche Art betriebene Anlage nicht erzeugt werden kann.

Diese Energiedifferenz, die bei der herkömmlichen Windenergieanlage verloren wäre, kann unter Umständen enorm groß werden. Die Höhe der Differenz hängt im wesentlichen von den Windverhältnissen am Standort der Anlage ab. Je größer die Zeiträume mit schwachen Windverhältnissen sind, desto größer wird die zusätzlich gewonnene Energie.

Die Drehzahlbereiche der beiden Betriebszustände ASM und DASM überschneiden sich in dem in Figur 2 durch Strichelung angedeuteten Umschaltbereich 21. Der Umschaltpunkt kann dabei je nach dem verwendeten Steueralgorithmus mal bei etwas höheren oder etwas niedrigeren Drehzahlen n liegen. Entsprechend unterschiedlich kann daher auch die zugehörige elektrische Leistung P ausfallen. Der dritte Abschnitt 19 der Leistungskurve stellt daher nicht den tatsächlichen Verlauf dar, sondern ist lediglich als schematische Darstellung des Übergangs zu verstehen.

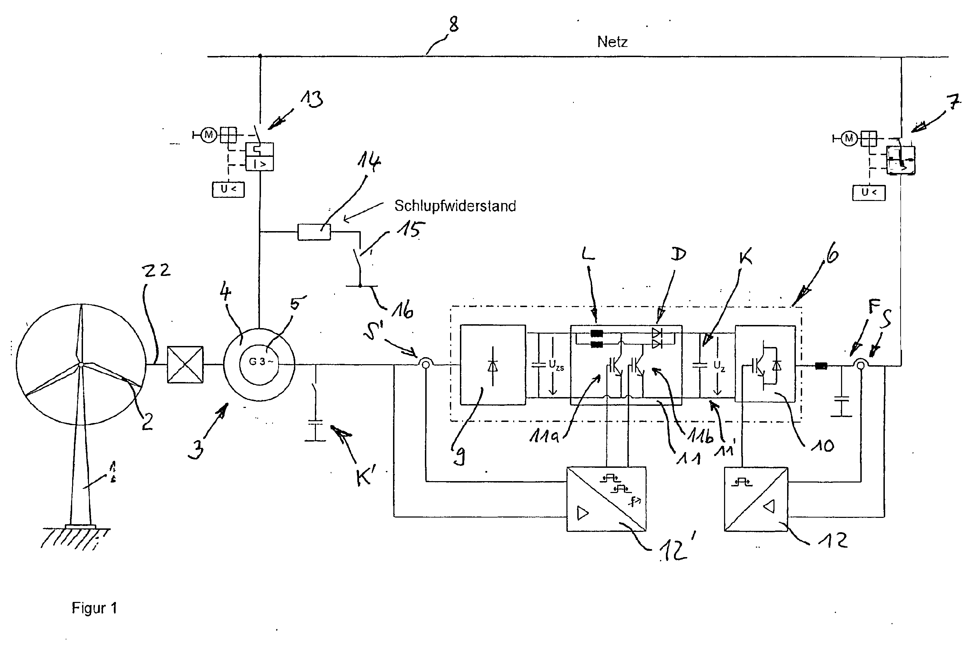

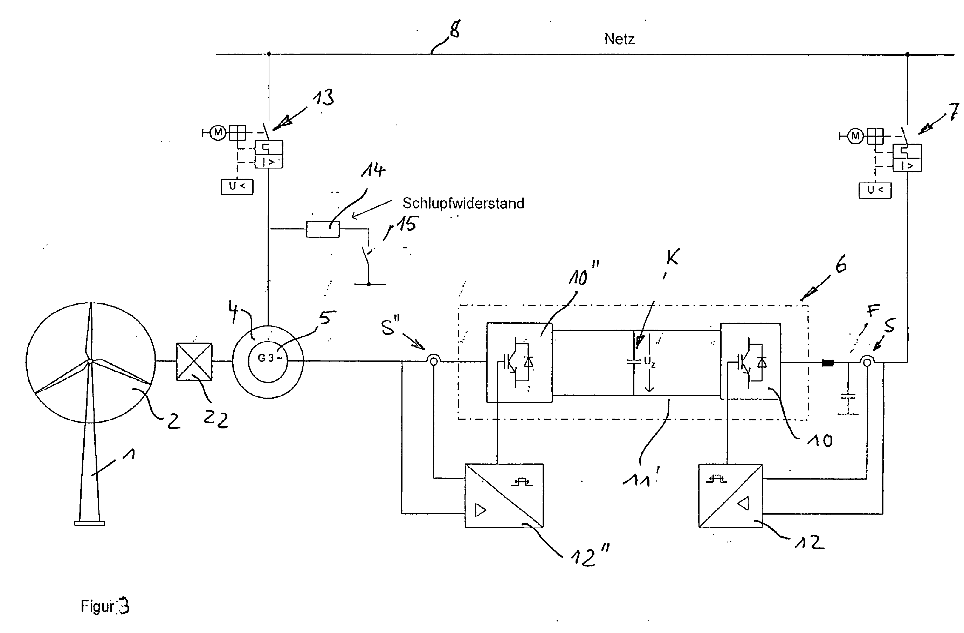

In Figur 3 ist eine alternative Ausführungsform der erfindungsgemäßen Windenergieanlage dargestellt, bei der der ungesteuerte Gleichrichter 9 in Figur 1 durch einen selbstgeführten Pulsumrichter 10" ersetzt ist und kein Hochsetzsteller im Zwischenkreis 11' vorhanden ist. Auch hier wir bei dem Drehstromgenerator 3 mit einer übersynchronen Kaskade die gesteuerte Schlupfleistung über einen selbstgeführten Pulsumrichter 10 in das Stromnetz eingespeist. Zur Aussteuerung von sinusförmigen Rotorströmen ist der Pulsumrichter 10" für die Einspeisung der Schlupfleistung in den Gleichspannungszwischenkreis vorgesehen aus dem durch einen zweiten Pulsumrichter 10 die Schlupfleistung in das Stromnetz 8 eingespeist wird. Zur Ansteuerung der Pulsumrichter 10" und 10 dienen die Steuergeräte 12" und 12, die mit den Stromsensoren S" und S verbunden sind.

### BEZUGSZEICHENLISTE

- 1: Turm
- 2: Propeller
- 3: Drehstromgenerator
- 4: Stator
- 5: Rotor
- 6: Umrichter
- 7: dritter Schalter
- 8: Stromnetz
- 9: Gleichrichter ungesteuert
- 10: Pulswechselrichter
- 10": Pulswechselrichter
- 11: Hochsetzsteller
- 11': Gleichspannungszwischenkreis
- 11a: Hochsetzsteller
- 11b: Hochsetzsteller
- 12: Steuervorrichtung
- 12': Steuervorrichtung
- 12": Steuervorrichtung
- 13: erster Schalter
- 14: Schlupfwiderstand
- 15: zweiter Schalter
- 16: Ständerkurzschluß
- L: Induktivität
- D: Diode
- K, K': Kondensator
- F: Netzfilter
- U_{ZS}: Gleichspannung
- U_{Z}: Spannung hochgesetzt
- S: Stromsensor
- S': Stromsensor
- S": Stromsensor
- 17: erster Abschnitt
- 18: zweiter Abschnitt
- 19: dritter Abschnitt
- 20: vierter Abschnitt
- 21: Umschaltbereich
- 22: mechanische Verbindung
- P: elektrische Leistung
- PN: Nennleistung
- n: Drehzahl
- nN: Nenndrehzahl
- ASM: Betrieb als Asynchronmaschine / Vollumrichterbetrieb
- DASM: Betrieb als doppeltgespeiste Asynchronmaschine / Normalbetrieb

## Patentansprüche

1. Windenergieanlage mit einem vom Wind antreibbaren Rotor, vorzugsweise mit einem oder mehreren Winkel verstellbaren Rotorblättern, einem mit dem Rotor direkt oder indirekt verbundenem Generator zur Erzeugung elektrischer Energie, der als Asynchrongenerator mit übersynchroner Stromrichterkaskade im Rotorkreis für einen schlupfvariablen Generatorbetrieb ausgebildet ist, so daß die Leistungsabgabe des Generators bei variabler Rotorendrehzahl möglich ist, und einem Betriebsführungssystem, das innerhalb eines vorgegebenen Windgeschwindigkeitsbereichs die Rotorendrehzahl, vorzugsweise unter Verstellen der Rotorblattwinkel, regelnd ausgebildet ist, wobei die übersynchrone Stromrichterkaskade im Rotorkreis zur Einspeisung der Schlupfleistung in das Netz ausgebildet ist, **dadurch gekennzeichnet, daß** der Stator bei einer niedrigen Windgeschwindigkeit sich kurzschließend, vorzugsweise über einen dreiphasigen Schlupfwiderstand, und sich vom Netz trennend ausgebildet ist.

2. Windenergieanlage nach Anspruch 1, **dadurch gekennzeichnet, daß** die übersynchrone Stromrichterkaskade einen Gleichspannungszwischenkreis aufweist, der als Hochsetzsteller ausgebildet ist.

3. Windenergieanlage nach Anspruch 1 oder 2, **dadurch gekennzeichnet, daß** der Hochsetzsteller mit einer Frequenz schaltend ausgebildet ist, die das Vielfache, vorzugsweise das 10 bis 100 fache, der Netzfrequenz beträgt.

4. Windenergieanlage nach Anspruch 1, 2 oder 3, **dadurch gekennzeichnet, daß** der Hochsetzsteller eine Pulsweitenmodulation aufweist.

5. Windenergieanlage nach einem oder mehreren der vorhergehenden Ansprüche, **dadurch gekennzeichnet, daß** der Hochsetzsteller aus IGBT-Schaltern mit variabler Frequenz schaltbar ausgebildet ist.

6. Windenergieanlage nach einem oder mehreren der vorhergehenden Ansprüche, **dadurch gekennzeichnet, daß** die IGBT-Schalter der beiden Hochsetzsteller mit 180 Grad Phasenversatz zueinander schaltend ausgebildet sind.

7. Verfahren zur Regelung der Leistungsabgabe einer Windenergieanlage nach Anspruch 2 indem der Schlupf geregelt wird, wobei die Schlupfleistung in das Netz eingespeist wird, **dadurch gekennzeichnet, daß** der Drehstromgenerator bei normalen Windverhältnissen im Normalbetrieb mit der übersynchronen Kaskade mit dem Hochsetzsteller betrieben wird und bei geringem Wind durch Trennen seines Stators vom Stromnetz und Kurzschließen desselben über einen dreiphasigen Schlupfwiderstand zu einer einfachen Asynchronmaschine umgeschaltet und als solche betrieben wird.

8. Verfahren nach Anspruch 7, **dadurch gekennzeichnet, daß** der Asynchrongenerator mit den Kondensatoren selbsterregend gefahren wird und frequenzvariabel in Abhängigkeit der Rotorumdrehungen seine elektrische Energie über den Gleichrichter und den Hochsetzsteller in die Zwischenkreiskondensatoren speist, und der Pulsumrichter die erzeugte Energie in das Stromnetz einspeist.

9. Verfahren nach Anspruch 7 oder 8, **dadurch gekennzeichnet, daß**, sobald die mechanische Leistung die elektrische Leistung des Pulsumrichters übersteigt, der Generator mit dem Stator synchronisiert und mit dem Stromnetz verbunden wird, und die übersynchrone Schlupfleistung mit der Kaskadenanordnung in das Netz gespeist wird.

10. Verfahren nach einem der Ansprüche 7 bis 09, **dadurch gekennzeichnet, daß** mindestens ein Kabel von dem vorzugsweise in einer Gondel angeordneten Generator zu einem Schaltschrank in einem Turmfuß geführt ist und als Schlupfwiderstand wirken.

11. Verfahren nach einem der Ansprüche 7 bis 10, **dadurch gekennzeichnet, daß** die Zwischenspannung der Stromrichterkaskade auf die Netzspannung angehoben und dem Schlupf entsprechend geregelt wird.

12. Verfahren nach einem der Ansprüche 7 bis 11, **dadurch gekennzeichnet, daß** die Leistungsabgabe der Stromrichterkaskade ins Netz durch eine Pulsweitenmodulation gesteuert wird.

13. Verfahren nach einem der Ansprüche 7 bis 12, **dadurch gekennzeichnet, daß** die Einspeisung der Zwischenkreisleistung ins Netz an den Blindenleistungsbedarf des Netzes angespaßt erfolgt.

14. Verfahren nach einem der Ansprüche 7 bis 14 , **dadurch gekennzeichnet, daß** die Schaltung des Zwischenkreisstromes durch die beiden Hochsetzsteller 180 Grad phasenversetzt zueinander, vorzugsweise pulsweitenmoduliert und/oder frequenzvariabel, erfolgt.

## Claims

1. Wind turbine comprising a rotor which can be driven by the wind, preferably comprising one or more rotor blades which can be adjusted in angle, a generator for generating electric energy which is directly or indirectly connected to the rotor and is constructed as an asynchronous generator with a super-synchronous converter cascade in the rotor circuit for variable-slip generator operation, in such a way that the power output of the generator is possible at variable rotational speeds of the rotor, and an operations management system constructed to regulate the rotational speed of the rotor within a predetermined wind speed range, preferably by adjusting the rotor blade angles, the super-synchronous converter cascade being constructed in the rotor circuit for feeding the slip power into the grid, **characterised in that** the stator is constructed to short circuit, preferably via a three-phase slip resistor, at a low wind speed and cut itself off from the grid.

2. Wind turbine according to claim 1, **characterised in that** the super-synchronous converter cascade has a direct voltage intermediate circuit which is constructed as a step-up converter.

3. Wind turbine according to either claim 1 or claim 2, **characterised in that** the step-up converter is constructed to switch at a frequency which is a multiple of the grid frequency, preferably 10 to 100 times the grid frequency.

4. Wind turbine according to claim 1, claim 2 or claim 3, **characterised in that** the step-up converter has pulse-width modulation.

5. Wind turbine according to one or more of the preceding claims, **characterised in that** the step-up converter is constructed in a switchable manner from variable-frequency IGBT switches.

6. Wind turbine according to one or more of the preceding claims, **characterised in that** the IGBT switches of the two step-up converters are constructed to switch with a mutual phase shift of 180 degrees.

7. Method for regulating the power output of a wind turbine according to claim 2, in which the slip is regulated, the slip power being fed into the grid, **characterised in that**, in normal wind conditions, in normal operation the three-phase generator is driven by the super-synchronous cascade with the step-up converter and in low wind is switched to a simple asynchronous machine by cutting off the stator thereof from the electricity grid and short-circuiting said stator via a three-phase slip resistor, and is operated as such.

8. Method according to claim 7, **characterised in that** the asynchronous generator with the capacitors is operated in a self-starting manner and feeds its electric energy into the intermediate circuit capacitors via the rectifier and the step-up converters at a variable frequency as a function of the rotor revolutions, and the pulse converter feeds the generated energy into the electricity grid.

9. Method according to either claim 7 or claim 8, **characterised in that**, as soon as the mechanical power exceeds the electric power of the pulse converter, the generator is synchronised with the stator and connected to the electricity grid, and the super-synchronous slip power is fed into the grid by the cascade arrangement.

10. Method according to any one of claims 7 to 9, **characterised in that** at least one cable of the generator, which is preferably arranged in a pod, is guided to a switch cabinet in a foot of the tower and acts as a slip resistor.

11. Method according to any one of claims 7 to 10, **characterised in that** the intermediate voltage of the converter cascade is raised to the grid voltage and regulated in accordance with the slip.

12. Method according to any one of claims 7 to 11, **characterised in that** the power output of the converter cascade into the grid is controlled by means of pulse-width modulation.

13. Method according to any one of claims 7 to 12, **characterised in that** the intermediate circuit power is fed into the grid and is adapted to the reactive power demand of the grid.

14. Method according to any one of claims 7 to 14, **characterised in that** the intermediate circuit current is switched by means of the two step-up converters, with a mutual phase shift of 180 degrees, preferably with pulse width modulation and/or at a variable frequency.

## Revendications

1. Centrale éolienne avec un rotor pouvant être entraîné par le vent, de préférence avec des pales de rotor réglables selon un ou plusieurs angles, un générateur, pouvant être raccordé directement ou indirectement au rotor, destiné à générer de l'énergie électrique, réalisé sous forme de générateur asynchrone à cascade de redressement de courant sursynchrone dans le circuit de rotor pour un fonctionnement de générateur variable par glissement, de sorte que la puissance sortie du générateur soit possible à nombre de tours variable du rotor, et un système de guidage de fonctionnement qui est réalisé de manière à régler, dans une plage de vitesses de vent prédéterminée, le nombre de tours du rotor, de préférence en réglant l'angle des pales de rotor, la cascade de redressement de courant sursynchrone dans le circuit de rotor étant réalisé pour l'alimentation de la puissance de glissement dans le réseau, **caractérisée par le fait que** le stator est réalisé pour, à faible vitesse de vent, se court-circuiter, de préférence par l'intermédiaire d'une résistance de glissement triphasé, et se déconnecter du réseau.

2. Centrale éolienne selon la revendication 1, **caractérisée par le fait que** la cascade de redressement de courant sursynchrone présente un circuit intermédiaire de tension continue qui est réalisé sous forme de convertisseur vers le haut

3. Centrale éolienne selon la revendication 1 ou 2, **caractérisée par le fait que** le convertisseur vers le haut est réalisé pour commuter avec une fréquence qui est un multiple, de préférence de dix à cent fois, de la fréquence de réseau.

4. Centrale éolienne selon la revendication 1, 2 ou 3, **caractérisée par le fait que** le convertisseur vers le haut présente une modulation de largeur d'impulsion.

5. Centrale éolienne selon une ou plusieurs des revendications précédentes, **caractérisée par le fait que** le convertisseur vers le haut est réalisé pour être commuté par des commutateurs IGBT à fréquence variable.

6. Centrale éolienne selon une ou plusieurs des revendications précédentes, **caractérisée par le fait que** les commutateurs IGBT des deux convertisseurs vers le haut sont réalisés pour commuter avec un déphasage de 180 degrés entre eux.

7. Procédé pour régler la puissance sortie d'une centrale éolienne selon la revendication 2 en réglant le glissement, la puissance de glissement étant alimentée dans le réseau, **caractérisé par le fait que** le générateur de courant triphasé est entraîné, dans des conditions de vent normales, en fonctionnement normal avec la cascade sursynchrone, par le convertisseurs vers le haut et, à faible vent, commute, par déconnexion de son stator du réseau de courant et court-circuitage de ce dernier par l'intermédiaire d'une résistance de glissement triphasée, à une simple machine asynchrone et fonctionne comme telle.

8. Procédé selon la revendication 7, **caractérisé par le fait que** le générateur asynchrone avec les condensateurs fonctionne à auto-excitation et alimente, de manière variable en fréquence en fonction du nombre de tours du rotor, son énergie électrique par l'intermédiaire du redresseur et du convertisseur vers le haut, vers les condensateurs du circuit intermédiaire, et que le convertisseur d'impulsion alimente l'énergie générée dans le réseau de courant.

9. Procédé selon la revendication 7 ou 8, **caractérisé par le fait que**, dès que la puissance mécanique excède la puissance électrique du convertisseur d'impulsion, le générateur se synchronise sur le stator et est connecté au réseau de courant, et la puissance de glissement sursynchrone est alimentée dans le réseau par l'aménagement en cascade.

10. Procédé selon l'une des revendications 7 à 9, **caractérisé par le fait qu'**au moins un câble du générateur disposé, de préférence, dans une nacelle est conduit à un coffret de commande dans le pied de la tour et agit comme résistance de glissement.

11. Procédé selon l'une des revendications 7 à 10, **caractérisé par le fait que** la tension intermédiaire de la cascade de redresseur de courant est élevée à la tension de réseau et réglée selon le glissement.

12. Procédé selon l'une des revendications 7 à 11, **caractérisé par le fait que** la puissance sortie de la cascade de redresseur de courant est guidée dans le réseau par une modulation de largeur d'impulsion.

13. Procédé selon l'une des revendications 7 à 12, **caractérisé par le fait que** l'alimentation de la puissance intermédiaire dans le réseau a lieu de manière adaptée au besoin de puissance réactive du réseau.

14. Procédé selon l'une des revendications 7 à 13, **caractérisé par le fait que** la commutation du courant de circuit intermédiaire a lieu par l'intermédiaire des deux convertisseurs vers le haut déphasés de 180 degrés entre eux, de préférence de manière modulée en largeur d'impulsion et/ou variable en fréquence.
